# FASCICULE DE BREVET EUROPEEN

(11) **EP 0 860 454 B1**
(45) Date de publication et mention de la délivrance du brevet: **02.11.2006**
(21) Numéro de dépôt: 98107203.6
(22) Date de dépôt: 17.04.1996
(51) Int. Cl.: C09D 133/06, C08F 220/12, C09D 157/10, C08G 18/62

(54) **Dispersions de latex à fonction hydroxyle et à fonction carboxylique**
Latex Dispersionen mit Hydroxyl- und Carboxyl Funktionen
Latex dispersions with hydroxyl and carboxyl functions

(30) Priorité: 28.04.1995 FR 9505123
(43) Date de publication de la demande: 26.08.1998
(62) Demande divisionnaire de: 96400814.8
(73) Titulaire: RHODIA CHIMIE, 92408 Courbevoie Cédex (FR)
(72) Inventeur: Joanicot, Mathieu, 92290 Chatenay-Malabry (FR); Michael, Theresa, Durban North 4051 (ZA); Langlois, Bruno, 91700 Sainte-Gennevieve-Des-Bois (FR); Richard, Joel, 49160 Blou (FR)
(74) Mandataire: Ricalens, François

(56) Documents cités:
- DE-A- 2 749 691
- FR-A- 2 387 249

## Description

La présente invention a pour objet des dispersions en phase aqueuse susceptibles de former après cuisson des revêtements de qualité qui permettent de réduire et même d'éliminer l'utilisation de solvant(s) dans les peintures.

Dans l'activité des peintures et des vernis, on utilise largement les dérivés alcooliques pour les condenser avec d'autres fonctions et notamment avec des fonctions isocyanates, qu'elles soient masquées ou non. Toutefois à ce jour, deux problèmes restent imparfaitement résolus, à savoir l'utilisation de solvants organiques dont la présence est réputée toxique pour les mammifères supérieurs et néfastes pour l'environnement, et la nécessité de mettre sur le marché des produits non volatils aux températures d'utilisation.

Un autre aspect des problèmes à résoudre dans l'industrie de la peinture et des vernis réside dans le prix souvent élevé de composés présentant des fonctions complexes tels que les isocyanates, masqués ou non.

Toutefois, il est difficile de sortir de ces fonctionnalités complexes car elles induisent des propriétés d'usage souvent remarquables. Il convient de rappeler ici que l'on évalue l'aptitude des compositions à former des peintures ou des vernis d'après les qualités des couches dont elles sont les précurseurs. Parmi les qualités essentielles d'une couche de vernis, il convient de signaler les qualités mécaniques et les qualités de tenue aux solvants. Parmi les qualités mécaniques, la dureté Persoz est un facteur très important. C'est pourquoi, l'un des buts de la présente invention est de fournir des compositions dans lesquelles le principal solvant est constitué par une phase aqueuse.

Un autre but de la présente invention est de fournir une composition qui seule, ou en association avec d'autres, conduise à des revêtements présentant de bonnes qualités mécaniques et notamment une bonne dureté Persoz.

Un autre but de la présente invention est de fournir une composition du type précédent qui présente une bonne résistance aux solvants.

Ces buts, et d'autres qui apparaîtront par la suite, sont atteints au moyen d'un Procédé de préparation de latex de particules de (co)polymère(s) dont la taille est comprise entre 10 et 1000 nanomètres,portant une fonction isocyanate avantageusement bloquée, une fonction alcool et une fonction carboxylique libre ou sous forme d'un de ses sels, répondant aux condition ci-après :
- le rapport (équivalent) entre les fonctions isocyanates masqués et alcool est compris entre 0,1 et 10, de préférence entre 0,2 et 4 ;
- le rapport (équivalent) entre les fonctions alcool et les fonctions carboxyliques est compris entre 0,2 et 5 ;
- le rapport (équivalent) entre les fonctions isocyanates et carboxyliques (NCO/COOH) est compris entre 0,1 et 10 de préférence entre 0,2 et 4
- la teneur en isocyanate étant comprise ente 0.05 et 1 milliéquivalent/gramme de particules.
par polymérisation en émulsion ou microémulsion, entre :
- un monomère indifférent, ou un mélange de monomères, non ionique et ne présentant pas de fonction alcoolique,
- un monomère alcoolique, ou un mélange de monomères, présentant une fonction alcoolique,
- un monomère acide, ou un mélange de monomères, présentant une fonction acide libre ou sous forme de l'un de ses sels
- un monomère porteur de fonction isocyanate masquée.

La concentration en matière solide de ces latex est avantageusement comprise entre 10 et 80 % et de préférence entre 10 et 60% en masse.

Les fonctions acides des particules de la population A sont des préférence des fonctions acides faibles dont le pKa est au plus égal à 2, de préférence au plus égal à 3. Parmi les fonctions acides donnant satisfaction, il est préférable d'utiliser des fonctions carboxyliques.

Les fonctions acides sont avantageusement, du moins celles qui sont susceptibles d'échange avec le milieu, sous forme de sels de manière à former des sels facilement dissociables. Parmi les cations donnant satisfaction, on peut citer les alcalins et les alcalino-terreux, notamment ceux des période au moins égale à la 3ème période de la classification périodique des éléments.

Les préférés sont les métaux alcalins et les cations qui leur sont proches. On peut en particulier citer les cations du type ammonium ou phosphonium en particulier les tri- et surtout les tétraalcoylés.

Dans la présente description, les caractéristiques de granulométrie font souvent référence à des notations du type dₙ où n est un nombre de 1 à 99, cette notation est bien connue dans de nombreux domaines techniques, mais est un peu plus rare en chimie, aussi peut-il être utile d'en rappeler la signification. Cette notation représente la taille de particule telle que n % (en poids, ou plus exactement en masse, puisque le poids n'est pas une quantité de matière mais une force) des particules soit inférieur ou égal à la dite taille.

Il peut être souhaitable que la population de ces particules présente une dispersité de la population A ([d₉₀-d₁₀]/d₉₀) comprise entre 0 et 1/4.

Les polymères de la population A sont en général issus d'une polymérisation entre divers monomères insaturés (insaturation de type éthylènique), avantageusement activée par :
- un monomère indifférent, ou un mélange de monomères, non ionique et ne présentant pas de fonction alcoolique,
- un monomère alcoolique, ou un mélange de monomères, présentant une fonction alcoolique,
- un monomère acide, ou un mélange de monomères, présentant une fonction acide libre ou sous forme de l'un de ses sels.

Comme monomère indifférent, on peut citer : les monomères de type éthylénique dont les principaux paradigmes sont isoprènes, le butadiène 1-3, le chlorure de vinylidène, et l'acrylonitrile ; les monomères de type vinyl aromatique dont on peut citer, à titre paradigmatique, les principaux représentants, à savoir le styrène, le bromostyrène, l'alphaméthylstyrène, l'éthylstyrène, le vinyltoluène, le chlorostyrène ou le vinylnaphtalène ; les monomères de type acrylique, parmi lesquels on peut citer à titre paradigmatique, les esters de l'acide acrylique, méthacrylique et les esters d'acide éthylénique à 4 ou 5 carbones.

Comme monomère alcoolique, on peut citer : les phénols présentant une fonction éthylénique activée par un noyau aromatique, les esters notamment acryliques de polyol notamment de diol dont au moins une des fonctions alcooliques est libre. On peut également citer les amides substituées par un radical alcoyle portant une fonction alcoolique telle que par exemple l'acrylamide de l'éthanolamine.

Comme monomère acide, on peut citer : tous les acides présentant une liaison activée, en particulier les acides de la série acrylique qui peuvent être substitués une ou plusieurs fois sur les atomes de carbone en alpha ou béta de la fonction carboxylique.

On peut également envisager des diacides présentant une double liaison activée, comme par exemple les acides fumariques, itaconiques, leurs produits de substitution et leurs isomères. Comme monomère "acide", on peut également, en lieu et place des acides ou de leurs sels, citer les anhydrides symétriques ou dissymétriques internes ou non, des acides précédemment cités.

Il convient également de remarquer qu'un monoester d'un diacide avec un diol dont une seule fonction est estérifiée permet de réaliser le greffage sur le polymère d'une fonction alcoolique avec une fonction acide, et peut donc remplacer les deux monomères cités en dernier, à savoir les monomères alcooliques et les monomères acides.

Il est préférable que les fonctions -ols soient des alcools aliphatiques de préférence primaires.

Ainsi selon la présente invention, il est préférable que les motifs soient issus des monomères explicités ci-dessus.

Il s'ensuit que les particules de (co)polymère(s) sont issues d'une copolymérisation entre au moins un acide libre présentant une liaison éthylénique activée et au moins un alcool libre présentant une fonction éthylénique activée.

A titre illustratif (ou plus précisément de paradigme), on peut plus particulièrement mentionner les (co)monomères suivants :

A titre de monomères vinyliques et acryliques convenant à l'invention, on peut plus particulièrement citer ceux dérivant du styrène, de l'acide acrylique, d'esters acryliques. L'acide méthacrylique, le maléate de monobenzyle, la 2-vinylpyridine, le méthylsulfonate de styrène, le chlorométhylstyrène, l'hydroxypropylméthacrylate, l'hydroxybutylacrylate, l'hydroxyéthylacrylate, l'acrylonitrile et/ou l'acroléine.

Ces monomères sont utilisés seuls ou en mélange entre eux en toute proportion, ou encore en mélange avec un autre monomère copolymérisable choisi parmi ceux précités.

Les particules de polymères peuvent être obtenues par la mise en oeuvre d'une quelconque technique de polymérisation comme la polymérisation en émulsion classique, en microémulsion ou le cas échéant, par polymérisation en milieu organique. Ces techniques familières à l'homme de l'art ne seront pas rappelées ici.

Les particules, constituant le latex porteur de fonction(s) selon l'invention, sont hydrophobes et possèdent avantageusement une taille (d₉₀) généralement comprise entre 0,01 micromètre et 10 micromètres et de préférence au plus égale à 5 micromètres, voire à 2 micromètres. Elles sont calibrées, monodispers(é)es et présentes dans le latex à raison d'une quantité variant entre 0,2 à 65 % en poids du poids total du latex.

La masse moléculaire moyenne en poids (M_{w} déterminée de preférence par chromatographie de perméation de gel, connue sous l'acronyme anglosaxon de "GPC") des polymères constitutifs des particules de la population A est avantageusement comprise entre 5.10⁴ et 5.10⁶, de préférence 0,8 10⁵ et 2.10⁶.

Les fonctions alcooliques ou les fonctions acides, de préférence carboxyliques peuvent être également obtenues par hydrolyse de fonctions alcoologènes (ester, éther, halogénure...) ou de fonctions acidogènes (ester, anhydride, chlorure d'acide, amide, nitrile...).

La répartition entre les différents types de motifs répond avantageusement aux règles suivantes :

La teneur en motif issu du monomère constitué par ledit alcool libre présentant une fonction éthylénique activée, et rapportée à la totalité des motifs de toute sorte, est avantageusement comprise entre 3 et 15 %, de préférence entre 4 et 10 % (mole, ou équivalent).

Selon un mode avantageux de la présente invention, le motif est issu d'un ester, d'un acide alpha éthylénique, avec un diol dont une des fonctions alcool reste non estérifiée. Ledit diol est avantageusement un diol oméga/oméga prime, avantageusement choisi parmi le propane diol-1,3 et le glycol.

Il est souhaitable que ledit acide alpha éthylénique soit un acide acrylique éventuellement substitué.

Selon un mode préféré de la présente invention, la teneur en motif issue d'un acide carboxylique libre (ou sous forme d'un de ses sels), et rapportée à la totalité des motifs de toute sorte, est comprise entre 2 et 10 % (mole).

Pour des raisons économiques, il est souvent avantageux que ledit acide libre soit un acide acrylique éventuellement monosubstitué ou un de ses sels.

Les particules issues de la présente invention peuvent être constituées de deux polymères distincts, le premier constituant le coeur et le second constituant la périphérie. Ce type de particule peut être obtenu par épipolymérisation [où une semence de latex est recouverte par polymérisation superficielle (épipolymérisation, parfois désignée par surpolymérisation)] d'un polymère distinct. Le coeur est parfois appelé germe par analogie au phénomène de cristallisation. Dans ce cas là, seul le deuxième polymère, c'est-à-dire le polymère superficiel, répond aux contraintes de concentration aux différentes fonctions selon la présente invention.

Les latex obtenus peuvent présenter une teneur en émulsifiant(s) au plus égale à 2 %, avantageusement au plus égale à 1 % en masse.

Selon un mode avantageux de mise en oeuvre de la présente invention, les particules ne forment qu'une seule population et portent les 3 fonctions sur une même particule, à savoir une fonction isocyanate avantageusement bloquée, une fonction alcool et une fonction acide libre ou sous forme d'un de ses sels.

Ainsi, le latex constitue une population de particules comportant à la fois des fonctions carboxyliques libres, des fonctions alcool libres et des fonctions isocyanates masquées. En ce cas, on obtient des dispersions autoréticulables au niveau des particules, puisque ces dernières contiennent simultanément les fonctions nécessaires à la réticulation.

La présence de fonction carboxylique libre (sous forme acide) ou sous forme de sel donne d'une part une remarquable stabilité physique à la dispersion, et d'autre part favorise de manière significative la formation d'une peinture ou d'un vernis par polycondensation réticulante. Cette propriété est valable pour toute les mises en oeuvre de la présente invention. Si l'on revient aux particules portant simultanément les 3 fonctions mentionnées ci-dessus, on peut noter qu'il est préférable qu'elles répondent, ou du moins leur couche superficielle, aux conditions exposées ci-après :
- le rapport (équivalent) entre les fonctions isocyanates masqués et alcool (NCO/OH) est compris entre 0,1 et 10, de préférence entre 0,2 et 4 ;
- le rapport (équivalent) entre les fonctions alcool et les fonctions carboxyliques (OH/COOH)est compris entre 0,2 et 5 ;
- le rapport (équivalent) entre les fonctions isocyanates et carboxyliques (NCO/COOH) est compris entre 0,1 et 10 de préférence entre 0,2 et 4.

Pour obtenir une bonne stabilité du latex selon la présente invention, il est souhaitable que le potentiel hydrogène, ou pH, soit compris entre 4 et 9, de préférence entre 5 et 8.

Plus particulièrement, selon cette mise en oeuvre de la présente invention, pour obtenir des résultats satisfaisants, il est souhaitable que la teneur du (co)polymère (latex ou épicouche dans le cas d'une épipolymérisation) en fonction(s) isocyanate(s) bloquée(s) soit au moins égale à 5.10⁻² avantageusement à 0,1 ; de préférence à 0,2 fonction plus préférentiellement 0,3 fonction par kilogramme (équivalents par kilogramme).

Il n'y a pas de limite supérieure sinon économique ; il est toutefois souhaitable que le pourcentage (en masse) du, ou du mélange de, monomère(s) porteur d'isocyanate masqués, ne dépasse pas 75 % de la masse de latex. Il n'y a de limite supérieure qu'économique.

Dans le cas ou l'on utilise un "trimère" de HMDI [HexaMéthylèneDiisocyanate c'est-à-dire OCN - (CH₂)₆ - NCO], vendu sous le nom de Tolonate^{®}, avec environ deux fonctions isocyanates masquées par une protection méthyléthylcétoxime et une branche acrylate d'hydroxyéthyle greffée sur la dernière fonction isocyanate, une valeur de 0,1 fonction par kilogramme correspond environ à une incorporation de 5 % en masse du monomère de formule I dans le latex.

Les compositions selon la présente invention peuvent comporter des catalyseurs de démasquage connus en eux-même pour aider au demasquage de la fonction choisie. On peut notamment citer les composés de l'étain et du zinc, tels que dicarboxylate de dialcoylétain, carboxylate de zinc et bétadicétonate d'étain.

Elle peuvent également comprendre une base colorée, notamment du type comportant un pigment et du bioxyde de titane.

Les agents masquants utilisables sont des agents connu en soi, mais qui présentent bien sûr la propriété de former des dérivés stables dans les conditions de synthèse et de conservation des latex. Lorsque l'on choisit l'agent masquant il convient de tenir compte de la propriété surprenante des particules associant fonction acide et alcool selon la présente invention, de libérer les isocyanates à une température plus basse qu'usuellement (environ 20°C en dessous).

Parmi les groupes masquant on peut choisir les groupements à hydrogène mobile dont le pKa est au plus égal à 14, avantageusement à 12, de préférence à 10 et plus préférentiellement 8.

Plus le pKa est élevé, plus il est souhaitable que l'agent masquant soit volatil (sous réserve que ce caractère volatil n'altère les qualités des éventuelles peintures).

Les agents masquant sont choisis de manière que l'émulsion soit stable à sa température de conservation.

Parmi les fonctions chimiques susceptible de masquer les isocyanates on peut citer à titre d'exemples, ou plutôt de paradigmes, les fonctions suivantes :
- les alcools (y compris les vinyliques et les phénols) et les thiols ;
- les oximes (dont la plus courante est la méthyléthylcétoxime, dite "MEKO") ;
- les hydroxylamines ;
- les acides ;
- les amides et notamment les imides ;
- les bétadicétones ;
- les pyrazoles, notamment ceux obtenus par l'action de bétadicétones sur l'hydrazine.

La présente invention se rapporte à un procédé de préparation de latex porteurs de fonction(s) isocyanate(s) selon les techniques suivantes :
- l'introduction, en cours de polymérisation du ou des monomères(s) constituant les particules du latex, d'un monomère selon l'invention en suspension dans une fraction du ou d'un des monomères et
- épipolymérisation qui consiste en une synthèse du type parfois désignée sous le terme anglo-saxon "core-shell": une semence de latex est épipolymérisée par le(s) (co)monomère(s) en présence d'initiateur et d'un tensioactif. Le monomère selon l'invention, en suspension dans une fraction de (co)monomère(s), est introduit en fin de polymérisation de façon à obtenir des billes de latex, d'une granulométrie précise et resserrée dans lesquelles le monomère selon l'invention est greffé à une distance plus ou moins grande du coeur des particules.

En général, la température de polymérisation est comprise entre 30 et 90°C, avantageusement entre 40 et 80°C. En général, la durée est comprise entre 1 et 10, avantageusement entre 4 et 8 heures.

Après polymérisation, le latex est traité par adjonction d'un système rédox et par distillation, éventuellement sous vide, afin d'en éliminer toute trace de monomères résiduels, puis purifié.

Avantageusement, le polymère constituant le latex contient de 1 à 50 % en poids, avantageusement 3 à 25 % en poids, d'un ou plusieurs des monomères définis dans la demande de brevet PCT N° WO 94/13712.

Les exemples non limitatifs suivants illustrent l'invention.
**Exemple 1 :** Préparation d'un latex de copolymère acrylique carboxylé témoin (T) ne contenant pas de groupements isocyanates bloqués.
Dans une cuve de 15 l, on mélange 2,28 kg d'eau désionisée avec 98 g d'une solution aqueuse de dodécylbenzènesulfonate de sodium (DBS-Na) de concentration 23 % en poids. On introduit dans cette solution et sous agitation le mélange de comonomères acryliques suivants:
- 2,25 kg de méthacrylate de méthyle (MAM),
- 2,025 kg d'acrylate de butyle (ABu),
- 225 g d'acide acrylique (AA),

Le mélange obtenu est émulsifié à l'aide d'un homogénéiseur ULTRA-TURAX (commercialisé par PROLABO) pendant 5 minutes à 20 000 tours/minute. On obtient ainsi une pré-émulsion des monomères acryliques stable dans le temps.
Dans un réacteur de 15 litres en acier inoxydable muni d'un agitateur, on introduit 4 kg d'eau désionisée que l'on porte à 80 °C sous agitation. On ajoute ensuite:
- 250 g de la pré-émulsion préparée ci-dessus,
- 250 g d'une solution aqueuse contenant 13,5 g d'initiateur persulfate d'ammonium.

On attend 15 minutes pour que l'amorçage de la réaction s'effectue, puis on ajoute sur une durée de 4 heures, le reste de la pré-émulsion, soit 6,53 kg. On ajoute ensuite 150 g d'eau et on laisse cuire à 81 °C pendant 1 heure. Puis on refroidit à 60 °C et on ajoute 6,4 g d'hydro peroxyde de tertiobutyle et 2,7 g de Na₂S₂O₅. On maintient la température à 60 °C pendant 30 minutes, puis on refroidit à température ambiante. On neutralise avec une solution de soude diluée à 10 %. On obtient ainsi un latex qui présente les caractéristiques suivantes :
- 39,8 % d'extrait sec massique,
- pH = 7,3,
- viscosité Brookfield RTV-DV 11 (50 t/min) : 25 centipoises,
- taille des particules : 0,435 micromètres,
- taux de grains (mesuré sur filtre 50 µm) : 80 ppm.

**Exemple 2** : Préparation d'un latex réactif (R) de copolymère acrylique carboxylé contenant 7% en poids du monomère ester acrylique fonctionnel AEHDB porteur de fonctions isocyanates bloquées réactives (2,3 mmoles de NCO réactif par gramme de monomère).
le AEHDB est obtenu selon la technique décrite dans la demande de brevet PCT N° WO 94/13712 publiée le 23 Juin 1994 sous ce numéro (par exemple selon l'exemple) par condensation dans l'acrylate de butyle (ABu), de l'hydroxyéthylacrylate avec le trimère HDT partiellement bloqué avec la méthyléthylcétoxime.
Dans une cuve de 15 l, on mélange 2,3 kg d'eau désionisée avec 97,6 g d'une solution aqueuse de dodécylbenzènesulfonate de sodium (DBS-Na) de concentration 23 % en poids. On introduit dans cette solution et sous agitation le mélange de comonomères acryliques suivants :
- 1,93 kg de méthacrylate de méthyle (MAM),
- 2,025 kg d'acrylate de butyle (ABu),
- 225 g d'acide acrylique (AA),
- 524 g d'un mélange de AEHDB/ABu contenant 60 % en poids du monomère fonctionnel (soit 0,72 mole de NCO réactif total).

Le mélange obtenu est émulsifié à l'aide d'un homogénéiseur ULTRA-TURAX (commercialisé par PROLABO) pendant 5 minutes à 20 000 tours/minute. On obtient ainsi une pré-émulsion des monomères acryliques stable dans le temps.
Dans un réacteur de 15 litres en acier inoxydable muni d'un agitateur, on introduit 4 kg d'eau désionisée que l'on porte à 80 °C sous agitation. On ajoute ensuite :
- 200 g de la pré-émulsion préparée ci-dessus,
- 250 g d'une solution aqueuse contenant 13,5 g d'initiateur persulfate d'ammonium.

On attend 15 minutes pour que l'amorçage de la réaction s'effectue, puis on ajoute sur une durée de 4 heures, le reste de la pré-émulsion, soit 6,8 kg. On ajoute ensuite 300 g d'eau et on laisse cuire à 81 °C pendant 1 heure. Puis on refroidit à 60 °C et on ajoute 4,5 g d'hydroperoxyde de tertiobutyle et 2,7 g de Na₂S₂O₅ . On maintient la température à 60 °C pendant 30 minutes, puis on refroidit à température ambiante. On neutralise avec une solution de soude diluée à 10 %. On obtient ainsi un latex qui présente les caractéristiques suivantes :
- 40,3 % d'extrait sec massique,
- pH = 7,2,
- viscosité Brookfield RTV-DV 11 (50 t/min) : 25 centipoises,
- taille des particules: 0,690 micromètres,
- taux de grains (mesuré sur filtre 50 µm) : 100 ppm.

**Exemple 3 :** Préparation d'un latex auto-réticulable (AR1) de copolymère acrylique carboxylé contenant à la fois 5% en poids du monomère ester acrylique hydroxylé (hydroxyéthyl-méthacrylate ou HEMA) porteur de fonctions OH réticulantes (7,7 mmole de-OH / g de monomère), et 7% en poids du monomère ester acrylique fonctionnel AEHDB porteur de fonctions isocyanates bloquées réactives (2,3 mmoles de NCO réactif par gramme de monomère).
On procède exactement de la même façon que dans les exemples 2 et 3, dans les deux étapes de pré-émulsion et de polymérisation, mais avec la composition suivante pour la pré-émulsion des comonomères acryliques :
- 2 kg de méthacrylate de méthyle (MAM), .
- 1,66 kg d'acrylate de butyle (ABu),
- 235 g d'acide acrylique (AA),
- 235 g de monomère hydroxyéthylméthacrylate (HEMA).
- 548 g d'un mélange de AEHDB/ABu contenant 60 % en poids du monomère fonctionnel (soit 0,75 mole de NCO réactif total).

On obtient ainsi après polymérisation et refroidissement un latex qui présente les caractéristiques suivantes :
- 40,4 % d'extrait sec massique,
- pH = 7,2,
- viscosité Brookfield RTV-DV 11 (50 t/min à 25 °C) : 43 centipoises,
- taille des particules : 0,830 micromètres,
- taux de grains (mesuré sur filtre 50 µm) : 150 ppm.

**Exemple 4 :** Préparation d'un latex auto-réticulable (AR2) de copolymère acrylique contenant à la fois 10 % en poids du monomère ester acrylique hydroxylé (hydroxyéthylméthacrylate ou HEMA) porteur de fonctions -OH réticulantes (7,7 mmole de-OH / g de monomère), et 7% en poids du monomère ester acrylique fonctionnel AEHDB porteur de fonctions isocyanates bloquées réactives (2,3 mmoles de NCO réactif par gramme de monomère).
On procède exactement de la même façon que dans les exemples 2 et 3, dans les deux étapes de pré-émulsion et de polymérisation, mais avec la composition suivante pour la pré-émulsion des comonomères acryliques :
- 1,93 kg de méthacrylate de méthyle (MAM),
- 1,50 kg d'acrylate de butyle (ABu),
- 235 g d'acide acrylique (AA),
- 470 g de monomère hydroxyéthylméthacrylate (HEMA).
- 548 g d'un mélange de AEHDB/ABu contenant 60 % en poids du monomère fonctionnel (soit 0,75 mole de NCO réactif total).

On obtient ainsi après polymérisation et refroidissement un latex qui présente les caractéristiques suivantes:
- 40,5 % d'extrait sec massique,
- pH = 7,4,
- viscosité Brookfield RTV-DV 11 (50 t/min à 25 °C) : 46 centipoises,
- taille des particules: 0.650 micromètres,
- taux de grains (mesuré sur filtre 50 µm): 150 ppm.

**Exemple 5 :** Formulations et évaluation des vernis formulés à partir des dispersions aqueuses des polymères T, R, ARI, AR2.
**a).Formulations** : les latex préparés dans les exemples 1 à 4 précédents sont introduits dans les formulations de vernis suivantes :

| **N° Formulation** | **Compositions des formulations de vernis** |
|---|---|
| 1 | Latex T (0,70 méq COOH / g de vernis) |
| 2 | Latex T + émulsion de TOLONATE bloqué(*) |
| | (0.55 méq COOH + 0,85 méq NCO réactif / g de vernis) |
| 3 | Latex R |
| | 0,70 méq COOH + 0,16 méq NCO |
| | (réactif / g de vernis) |
| 4 | Latex AR 1 |
| | (0,70 méq COOH + 0,38 méq OH + 0,16 méq NCO réactif /g de vernis) |
| 5 | Latex AR2 |
| | (0,70 méq COOH + 0,76 méq OH + 0,16 méq NCO réactif /g de vernis) |

| | |
|---|---|
| (*) Dans la formulation 2, on a introduit 25 % en poids de TOLONATE HDT bloqué (méthyléthylcétoxime ou MEKO), sous forme d'une émulsion aqueuse, d'extrait sec massique 80 %, de diamètre moyen 1 µm, stabilisée avec un tensio-actif non ionique (nonylphénolpolyoxyéthyléné de type Antarox 461 P). | |

Les valeurs d'usage de ces formulations aqueuses sont comparées entre elles, et certaines sont comparées à celles que l'on obtient avec une formulation de base (B) en milieu solvant : TOLONATE HDT bloqué + polyol SYNAQUA 3510 WL (rapport NCObloqué/ OH = 1) après cuisson à 160 °C pendant 30 min.
**b) Méthodes d'évaluation**
* L'aspect de certains vernis a été évalué par formation de films sur des plaques de verre, sous une épaisseur humide de 100 µm. Le séchage des films a lieu pendant 8 heures à température de 50 °C. Puis une cuisson est pratiquée pendant 1 heure à 160 °C. On évalue le caractère diffusant ou homogène transparent des films ainsi formés.
* Les mesures de dureté Persoz sont effectuées, grâce au pendule d'évaluation de dureté Gardco HA 5854 (nombre d'oscillations), sur des vernis déposés sur une plaque d'aluminium, sous une épaisseur humide de 300 µm. Le séchage des films a lieu pendant 8 heures à une température de 50 °C. Puis une cuisson est pratiquée pendant 30 minutes à 140 °C. Les vernis obtenus sont ensuite refroidis à 25°C et caractérisés grâce au pendule Persoz dont on mesure le nombre d'oscillations. Les vernis sont également caractérisés en dureté Persoz avant cuisson des échantillons (uniquement séchage à 50° C). Des mesures de dureté Persoz sont aussi effectuées sur certains échantillons de vernis préparés sur supports de verre (voir ci-dessus).
* La reprise d'eau et le gonflement en solvant (mélange tétrahydrofurane/méthyléthylcétone en proportions 90/10) sont évalués par une méthode de pesée d'échantillons de films épais (1mm) préparés par déshydratation des formulations dans des moules silicones selon le même processus que celui décrit ci-dessus (séchage des films pendant 8 heures à 50 °C, puis cuisson pendant 30 minutes à 140 °C).

Les manipulations de reprise d'eau et de gonflement sont effectuées à température ambiante. La reprise d'eau est exprimée, sous la forme de la variation de poids de l'échantillon, en pourcentage massique d'eau absorbée à l'équilibre (environ 4 heures). Le gonflement est exprimé sous la forme du rapport du poids de l'échantillon gonflé par le solvant à l'équilibre (environ 4 heures), au poids du même échantillon sec.
* L'allongement et la contrainte à la rupture sont évalués grâce à une machine de traction (Adamel-Lhomargy DY 15) sur des éprouvettes de films de largeur 4 mm et de longueur 10 mm, préparées par déshydratation des formulations dans des moules silicones selon le même processus que celui décrit ci-dessus (séchage des films pendant 8 heures à 50 °C, puis cuisson pendant 30 minutes à 140 °C). L'allongement à la rupture est exprimé en pourcentage de la longueur initiale de l'échantillon et la contrainte à la rupture en MPa.
* Le module d'Young des vernis est mesuré à partir de la pente à l'origine des courbes de traction (machine de traction Adamel-Lhomargy DY 15), qui représentent la contrainte appliquée en fonction de l'allongement du film.
* La cinétique de réticulation des vernis est étudiée en régime de petites déformations (amplitude < 0,3 %) par la méthode d'analyse mécanique dynamique (AMD) sur des films d'épaisseur 0,5 mm, de largeur 4 mm et de longueur 10 mm à 25 °C sur l'appareil Perkin-Elmer DMA 7. Les éprouvettes sont préparées par déshydratation des formulations dans des moules silicones selon le même processus que celui décrit ci-dessus (séchage des films pendant 8 heures à 50 °C). Puis l'évolution du module élastique E' en fonction du temps est suivie par AMD pendant la cuisson des vernis à 160 °C.

**Exemple 6 :** Comparaison des performances des vernis formulés, déterminées selon les protocoles expérimentaux décrits dans l'exemple 5.

### a) Caractéristiques mécaniques:

| **N° Formulation** | **Dureté Persoz (sur AI) (n.o*) avant cuisson (140°C)** | **Dureté Persoz (sur Al) (n.o.*) après cuisson (140°C)** | **Dureté Persoz (sur verre) (n.o.*) après cuisson (160°C)** | **Allongement rupture (%) après cuisson (140°C)** | **Contrainte rupture (MPa) après cuisson (140°C)** | **Module d'Young (GPa) après cuisson (140°C)** |
|---|---|---|---|---|---|---|
| B | - | - | 428 | | - | - |
| 1 | 170 | 170 | 230 | 340 | 85 | 15,5 |
| 2 | 120 | 180 | - | 445 | 45 | 2 |
| 3 | 120 | 130 | - | - | 75 | 7 |
| 4 | 180 | 200 | 415 | 340 | 85 | 11 |
| 5 | - | - | 480 | - | - | - |

La formulation 4 fournit la dureté Persoz la plus élevée sur métal. Elle présente également une dureté Persoz très élevée sur verre, et équivalente à celle que fournit le système en phase solvant. La formulation 5 conduit à une dureté Persoz supérieure à celle du système solvant, sur verre. Les contraintes à la rupture les plus élevées (> 70 MPa) sont obtenues avec les systèmes à base de latex seuls (de type R ou AR) pour lesquels l'ensemble des fonctions (-COOH, -OH et -NCO) sont contenues dans une seule particule. Le vernis à base de latex AR permet d'obtenir des performances mécaniques élevées (contrainte à la rupture, module d'Young, dureté Persoz sur verre) sans diminution significative de l'allongement à la rupture (souplesse).

### b) Tenue au solvant et à l'eau - Aspect des vernis.

| **N° Formulation** | **Reprise d'eau (%) après cuisson (140°C)** | **Gonflement en solvant après cuisson (140°C)** | **Aspect des vernis sur verre après cuisson (160°C)** |
|---|---|---|---|
| 1 | 0,2 | 11 | Film transparent |
| 2 | 1 | 8 | Film transparent |
| | | | (léger jaunissement) |
| 3 | 5 | 2 | Film transparent |
| 4 | 10 | 2 | Film homogène, transparent, clair |
| 5 | - | - | Film homogène, transparent, clair |

Les formulations 3 et 4 fournissent les meilleurs compromis de propriétés.

### Exemple 7

L'évolution du module élastique du vernis issu de la formulation 4 est suivie par AMD en fonction du temps selon le protocole expérimental décrit dans l'exemple 5. Les résultats sont présentés dans le tableau ci-dessous :

| **N° Formulation** | **Module élastique du vernis (E' x 10**^{**5**} **Pa)** | | | | | | | |
|---|---|---|---|---|---|---|---|---|
| | **Temps de cuisson à 160° C(min)** | | | | | | | |
| 4 | 6 | 12 | 25 | 50 | 75 | 100 | 200 | 400 |
| | 4 | 6 | 7,5 | 9 | 9,5 | 10 | 10 | 10 |

## Revendications

1. Procédé de préparation de latex de particules de (co)polymère(s) dont la taille est comprise entre 10 et 1000 nanomètres, portant une fonction isocyanate avantageusement bloquée, une fonction alcool et une fonction carboxylique libre ou sous forme d'un de ses sels, répondant aux conditions ci-après :
• le rapport (équivalent) entre les fonctions isocyanates masqués et alcool est compris entre 0,1 et 10, de préférence entre 0,2 et 4 ;
• le rapport (équivalent) entre les fonctions alcool et les fonctions carboxyliques est compris entre 0,2 et 5 ;
• le rapport (équivalent) entre les fonctions isocyanates et carboxyliques (NCO/COOH) est compris entre 0,1 et 10 de préférence entre 0,2 et 4
• la teneur en isocyanate étant comprise entre 0,05 et 1 milliéquivalent/gramme de particules
par polymérisation en émulsion ou microémulsion, entre :
- un monomère indifférent, ou un mélange de monomères, non ionique et ne présentant pas de fonction alcoolique,
- un monomère alcoolique, ou un mélange de monomères, présentant une fonction alcoolique,
- un monomère acide, ou un mélange de monomères, présentant une fonction acide libre ou sous forme de l'un de ses sels
- un monomère porteur de fonction isocyanate masquée.

2. Procédé selon la revendication 1, **caractérisé par le fait que** ledit monomère porteur de fonction isocyanate masquée représente au plus 75% en masse dudit latex.

3. Procédé selon les revendications 1 et 2, **caractérisé par le fait que** la température de polymérisation est comprise entre 30 et 90°C, avantageusement entre 40 et 80°C.

4. Procédé selon les revendications 1 à 3, **caractérisé par le fait que** la durée de ladite polymérisation est comprise entre 1 et 10, avantageusement entre 4 et 8 heures.

5. Procédé selon les revendications 1 à 4, **caractérisé par le fait que** ladite polymérisation est une épipolymérisation sur un germe.

6. Latex de particules de (co)polymère(s) dont la taille est comprise entre 10 et 1000 nanomètres, portant une fonction isocyanate avantageusement bloquée, une fonction alcool et une fonction carboxylique ou sous forme d'un de ses sels, répondant aux condition ci-après :
• le rapport (équivalent) entre les fonctions isocyanates masqués et alcool est compris entre 0,1 et 10, de préférence entre 0,2 et 4 ;
• le rapport (équivalent) entre les fonctions alcool et les fonctions carboxyliques est compris entre 0,2 et 5 ;
• le rapport (équivalent) entre les fonctions isocyanates et fonctions carboxyliques est compris entre 0,1 et 10 de préférence entre 0,2 et 4 ;
• la teneur en isocyanate étant comprise entre 0,05 et 1 milliéquivalent/gramme de particules
et susceptible d'être obtenu par le procédé selon les revendications 1 à 6.

## Claims

1. Method of preparing a latex of (co)polymer particles, the size of which is between 10 and 1000 nanometres, carrying an advantageously blocked isocyanate functional group, an alcohol functional group and a carboxylic functional group, either free or in the form of one of its salts, satisfying the conditions below:
• the (equivalent) ratio of the blocked isocyanate functional groups to the alcohol functional groups is between 0.1 and 10, preferably between 0.2 and 4;
• the (equivalent) ratio of the alcohol functional groups to the carboxylic functional groups is between 0.2 and 5;
• the (equivalent) ratio of the isocyanate functional groups to the carboxylic functional groups (NCO/COOH) is between 0.1 and 10, preferably between 0.2 and 4,
• the isocyanate content being between 0.05 and 1 milliequivalents/gram of particles,
by emulsion or microemulsion polymerization between:
- any monomer, or monomer mixture, which is nonionic and has no alcohol functional group;
- an alcohol monomer, or monomer mixture, which has an alcohol functional group;
- an acid monomer, or monomer mixture, which has an acid functional group, either free or in the form of one of its salts; and
- a monomer carrying a blocked isocyanate functional group.

2. Method according to Claim 1, **characterized in that** said monomer carrying a blocked isocyanate functional group represents at most 75% by weight of said latex.

3. Method according to Claims 1 and 2, **characterized in that** the polymerization temperature is between 30 and 90°C, advantageous between 40 and 80°C.

4. Method according to Claims 1 to 3, **characterized in that** the duration of said polymerization is between 1 and 10 hours, advantageously between 4 and 8 hours.

5. Method according to Claims 1 to 4, **characterized in that** said polymerization is an epipolymerization on a seed.

6. Latex of (co)polymer particles, the size of which is between 10 and 1000 nanometres, carrying an advantageously blocked isocyanate functional group, an alcohol functional group and a carboxylic functional group, either free or in the form of one of its salts, satisfying the conditions below:
• the (equivalent) ratio of the blocked isocyanate functional groups to the alcohol functional groups is between 0.1 and 10, preferably between 0.2 and 4;
• the (equivalent) ratio of the alcohol functional groups to the carboxylic functional groups is between 0.2 and 5;
• the (equivalent) ratio of the isocyanate functional groups to the carboxylic functional groups is between 0.1 and 10, preferably between 0.2 and 4,
• the isocyanate content being between 0.05 and 1 milliequivalents/gram of particles,
and capable of being obtained by the method according to Claims 1 to 6.

## Patentansprüche

1. Verfahren zur Herstellung von Latex aus Teilchen von (Co)Polymer(en), deren Größe zwischen einschließlich 10 und 1000 Nanometer beträgt, wobei das (Co)Polymer eine Isocyanatfunktion, vorteilhafterweise blockiert, eine Alkoholfunktion und eine Carbonsäurefunktion, frei oder in Form von einem ihrer Salze, trägt, entsprechend den nachstehenden Bedingungen:
■ das (äquivalente) Verhältnis zwischen den maskierten Isocyanatfunktionen und den Alkoholfunktionen beträgt zwischen einschließlich 0,1 und 10, vorzugsweise zwischen 0,2 und 4;
■ das (äquivalente) Verhältnis zwischen den Alkoholfunktionen und den Carbonsäurefunktionen beträgt zwischen einschließlich 0,2 und 5;
■ das (äquivalente) Verhältnis zwischen den Isocyanatfunktionen und den Carbonsäurefunktionen (NCO/COOH) beträgt zwischen einschließlich 0,1 und 10, vorzugsweise zwischen 0,2 und 4;
■ der Gehalt an Isocyanat beträgt zwischen einschließlich 0,05 und 1 Milliäquivalent/Gramm Teilchen,
durch Emulsionspolymerisation oder Mikroemulsionspolymerisation zwischen:
- einem indifferenten Monomer oder einer Mischung von Monomeren, nicht ionisch und keine Alkoholfunktion aufweisend,
- einem alkoholischen Monomer oder einer Mischung von Monomeren, aufweisend eine Alkoholfunktion,
- einem sauren Monomer oder einer Mischung von Monomeren, aufweisend eine Säurefunktion, in freier Form oder in Form von einem ihrer Salze,
- einem Monomer, das eine maskierte Isocyanatfunktion trägt.

2. Verfahren nach Anspruch 1, **dadurch gekennzeichnet, daß** das genannte Monomer, das eine maskierte Isocyanatfunktion trägt, höchstens 75 Masse-% des genannten Latex darstellt.

3. Verfahren nach Anspruch 1 und 2, **dadurch gekennzeichnet, daß** die Temperatur der Polymerisation zwischen einschließlich 30 °C und 90 °C, vorteilhafterweise zwischen 40 °C und 80 °C beträgt.

4. Verfahren nach Anspruch 1 bis 3, **dadurch gekennzeichnet, daß** die Dauer der genannten Polymerisation zwischen einschließlich 1 und 10, vorteilhafterweise zwischen 4 und 8 Stunden beträgt.

5. Verfahren nach Anspruch 1 bis 4, **dadurch gekennzeichnet, daß** die genannte Polymerisation eine Epipolymerisation auf einem Keim ist.

6. Latex aus Teilchen von (Co)Polymer(en), deren Größe zwischen einschließlich 10 und 1000 Nanometer beträgt, wobei das (Co)Polymer eine Isocyanatfunktion, vorteilhafterweise blockiert, eine Alkoholfunktion und eine Carbonsäurefunktion, frei oder in Form von einem ihrer Salze, trägt, entsprechend den nachstehenden Bedingungen:
■ das (äquivalente) Verhältnis zwischen den maskierten Isocyanatfunktionen und den Alkoholfunktionen beträgt zwischen einschließlich 0,1 und 10, vorzugsweise zwischen 0,2 und 4;
■ das (äquivalente) Verhältnis zwischen den Alkoholfunktionen und den Carbonsäurefunktionen beträgt zwischen einschließlich 0,2 und 5;
■ das (äquivalente) Verhältnis zwischen den Isocyanatfunktionen und den Carbonsäurefunktionen beträgt zwischen einschließlich 0,1 und 10, vorzugsweise zwischen 0,2 und 4;
■ der Gehalt an Isocyanat beträgt zwischen einschließlich 0,05 und 1 Milliäquivalent/Gramm Teilchen,
und der geeignet ist, durch das Verfahren gemäß den Ansprüchen 1 bis 6 erhalten zu werden.
